# DEMANDE DE BREVET EUROPEEN

(11) **EP 3 699 117 A1**
(43) Date de publication de la demande: **26.08.2020**
(21) Numéro de dépôt: 20157974.5
(22) Date de dépôt: 18.02.2020
(51) Int. Cl.: B65G 47/08, B65G 57/06, B65G 57/22

(54) **DISPOSITIF DE PALETTISATION COMPORTANT UNE FAUSSE PALETTE MOBILE AU MOINS DANS UN PLAN HORIZONTAL**

(30) Priorité: 21.02.2019 FR 1901763
(71) Demandeur: Cetec Industrie Conditionnement, 24052 Périgueux (FR)
(72) Inventeur: LABRUE, Régis, 24000 PERIGUEUX (FR); GERBEAUD, Alain, 24600 VILLETOUREIX (FR)
(74) Mandataire: Fantin, Laurent

(57) **Abrégé**

L'invention a pour objet un dispositif de palettisation configuré pour déposer sur une palette (34), couche par couche, des sacs (32) selon un agencement prédéterminé, caractérisé en ce qu'il comprend au moins un actionneur (52) configuré pour déplacer une fausse palette (50) au moins dans un plan horizontal ainsi qu'un système de contrôle (54) pour contrôler le positionnement de la fausse palette (50) sous un système de dépose (38) afin de déposer les sacs sur la fausse palette (50) selon un agencement prédéterminé.

## Description

La présente demande se rapporte à un dispositif de palettisation comportant une fausse palette mobile au moins dans un plan horizontal.

Selon un mode de réalisation décrit dans le document FR3040375 et visible sur la figure 1, un dispositif de palettisation 10 comprend :
- au moins un ascenseur 12 configuré pour déplacer verticalement une palette 14 lors de son remplissage,
- une fausse palette 16, positionnée au-dessus de l'ascenseur 12, configurée pour occuper un état fermé (en trait plein) dans lequel au moins une couche de sacs est formée sur la fausse palette 16 et un état ouvert (en pointillé) dans lequel la couche de sacs formée sur la fausse palette 16 est déposée sur la dernière couche de sacs de la palette 14,
- un cadre 18, positionné au-dessus de la fausse palette 16, permettant de conformer la couche de sacs formée sur la fausse palette 16,
- un système d'alimentation en sacs 20 configuré pour alimenter le dispositif de palettisation en sacs les uns à la suite des autres,
- un système de dépose 22, positionné au-dessus de la fausse palette 16, configuré pour saisir les sacs en sortie du système d'alimentation en sacs 20 et les positionner selon un agencement déterminé sur la fausse palette 16.

A l'exception de ses mouvements d'ouverture et de fermeture, la fausse palette 16 est immobile et reliée à l'ascenseur 12.

Selon une configuration, le système d'alimentation en sacs 20 est configuré pour alimenter les sacs à une hauteur donnée fixe et selon une orientation identique pour tous les sacs.

Selon un mode de réalisation, le système de dépose 22 comprend une tête 24 configurée pour occuper un état fermé dans lequel elle supporte un sac et un état ouvert dans lequel elle laisse tomber le sac sur la fausse palette 16 ainsi qu'un bras robotisé 26 supportant la tête 24, configuré pour la déplacer dans l'espace selon au moins une rotation autour d'un axe vertical Z et selon deux translations sensiblement horizontales X et Y.

La combinaison de ces mouvements de rotation et de translation tend à complexifier et à augmenter le coût du système de dépose 22.

La présente invention vise à remédier à tout ou partie des inconvénients de l'art antérieur.

A cet effet, l'invention a pour objet un dispositif de palettisation configuré pour déposer sur une palette, couche par couche, des sacs selon un agencement prédéterminé, comprenant :
- un système d'alimentation en sacs configuré pour acheminer les sacs les uns à la suite des autres, selon une orientation d'alimentation donnée,
- un système de dépose, positionné dans le prolongement du système d'alimentation en sacs, configuré pour supporter au moins un sac, l'orienter selon une première ou deuxième direction de dépose et le déposer,
- une fausse palette sur laquelle chaque couche de sacs est formée avant d'être déposée sur la palette,
- un support pour supporter la palette.

Selon l'invention, le dispositif de palettisation comprend au moins un actionneur configuré pour déplacer la fausse palette au moins dans un plan horizontal ainsi qu'un système de contrôle pour contrôler le positionnement de la fausse palette sous le système de dépose afin de déposer les sacs sur la fausse palette selon un agencement prédéterminé.

Selon un premier mode de réalisation, l'actionneur est configuré pour déplacer la palette dans un plan horizontal et selon une direction verticale.

Selon un deuxième mode de réalisation, l'actionneur est configuré pour déplacer la fausse palette uniquement dans un plan horizontal situé juste en dessous du système de dépose, le support supportant la palette étant mobile verticalement de manière à ce que la palette vide ou la dernière couche déposée sur la palette soit positionnée juste en dessous de la fausse palette.

Selon une autre caractéristique, l'actionneur est un bras robotisé.

D'autres caractéristiques et avantages ressortiront de la description de l'invention qui va suivre, description donnée à titre d'exemple uniquement, en regard des dessins annexés parmi lesquels :
- la figure 1 est une représentation schématique de côté d'un dispositif de palettisation qui illustre un mode de réalisation de l'art antérieur,
- la figure 2 est une représentation schématique de côté d'un dispositif de palettisation qui illustre un premier mode de réalisation de l'invention,
- la figure 3 est une représentation schématique de dessus du dispositif de palettisation visible sur la figure 2, et
- la figure 4 est une représentation schématique de côté d'un dispositif de palettisation qui illustre un deuxième mode de réalisation de l'invention.

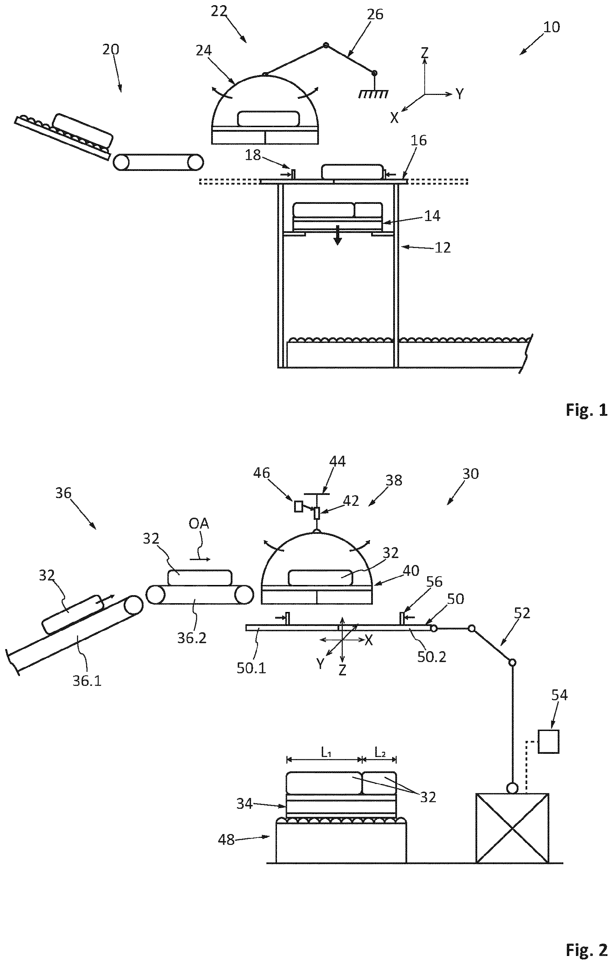

Sur les figures 2 à 4, on a représenté un dispositif de palettisation 30 adapté pour stocker des produits sur un plateau. A titre d'exemple, les produits stockés sont des sacs 32 et le plateau est une palette 34. Bien que décrite appliquée à des sacs et des palettes, l'invention n'est aucunement limitée à ces éléments.

Les sacs ont une forme approximativement parallélépipédique présentant une longueur L1 et une largeur L2. Sur la palette 34, les sacs 32 sont regroupés par couches qui sont superposées les unes sur les autres. Dans chaque couche, les sacs 32 sont positionnés selon un agencement prédéterminé. Ainsi, certains sacs 32 sont orientés selon une première direction de dépose X et d'autres selon une deuxième direction de dépose Y.

Le dispositif de palettisation 30 comprend un système d'alimentation en sacs 36 configuré pour acheminer les sacs les uns à la suite des autres, en un point donné, selon une orientation d'alimentation OA donnée. Selon une configuration, l'orientation d'alimentation OA est parallèle à l'une des première ou deuxième directions de dépose X ou Y.

Le système d'alimentation en sacs 36 achemine les sacs à une hauteur donnée fixe. Bien entendu, l'invention n'est pas limitée à cette configuration. Le système d'alimentation en sacs 36 pourrait acheminer les sacs à des hauteurs variables, en fonction notamment du niveau de remplissage de la palette 34.

Selon un mode de réalisation, le système d'alimentation en sacs 36 comprend, dans le sens de défilement des sacs 32, un premier convoyeur incliné 36.1 et un deuxième convoyeur 36.2 approximativement horizontal.

Le dispositif de palettisation 30 comprend un système de dépose 38, positionné dans le prolongement du système d'alimentation en sacs 36, configuré pour supporter au moins un sac 32 en sortie du système d'alimentation en sacs 36 et l'orienter selon l'une des première ou deuxième directions de dépose X ou Y. Selon un agencement, le système de dépose 38 est positionné dans le prolongement du deuxième convoyeur 36.2.

Selon un mode de réalisation, le système de dépose 38 comprend une tête 40 configurée pour occuper un état fermé dans lequel elle supporte un sac et un état ouvert dans lequel elle laisse tomber le sac. Cette tête 40 n'est pas plus décrite car elle peut être identique à celles de l'art antérieur. Le système de dépose 38 comprend une liaison pivotante 42 selon un axe vertical Z reliant la tête 40 à un châssis fixe 44 ainsi qu'un actionneur 46 permettant de faire pivoter la tête 40 autour de l'axe vertical Z et de la positionner selon une orientation souhaitée.

Contrairement à l'art antérieur, la tête 40 ne peut pas se déplacer dans un plan horizontal. Selon l'invention, le système de dépose 38 est uniquement prévu pour modifier, si nécessaire, l'orientation de chaque sac 32. Cette configuration permet de simplifier grandement le système de dépose 38 et donc d'en réduire le coût.

Selon un mode de fonctionnement, si le sac éjecté par le système d'alimentation en sacs 36 est correctement orienté, à savoir si l'orientation d'alimentation OA est parallèle à la direction de dépose, la tête 40 réceptionne le sac et le dépose sans aucun mouvement, hormis celui nécessaire au passage de l'état fermé à l'état ouvert. Si le sac éjecté par le système d'alimentation en sacs 36 n'est pas correctement orienté, à savoir si l'orientation d'alimentation OA est perpendiculaire à la direction de dépose, la tête 40 réceptionne le sac, pivote autour de l'axe vertical Z d'un angle de 90°, grâce à la liaison pivotante 42 et à l'actionneur 46, et dépose le sac en passant de l'état fermé à l'état ouvert.

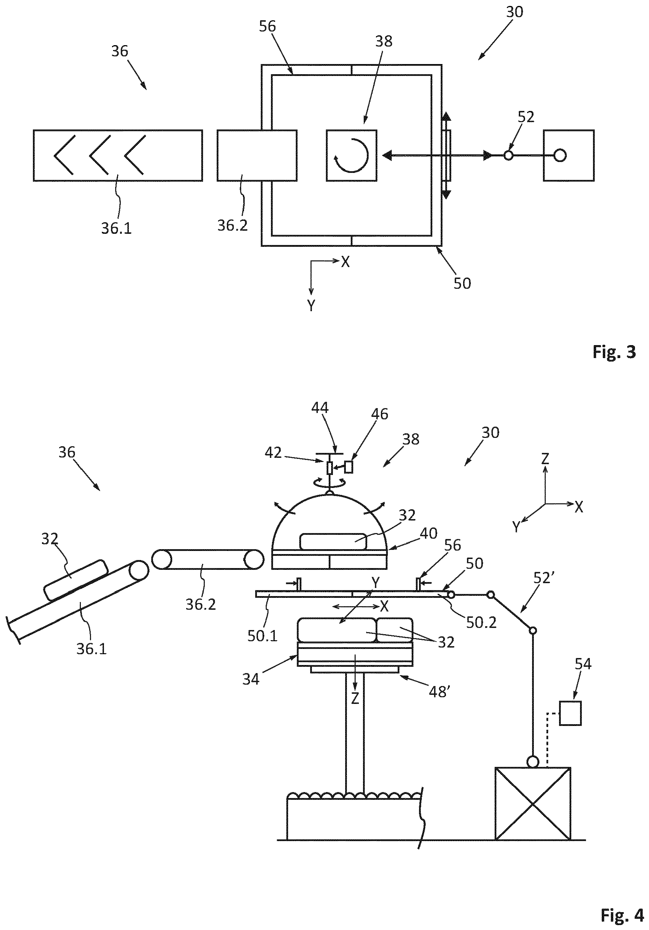

Selon un premier mode de réalisation visible sur les figures 2 et 3, chaque palette 34 est immobile lors de son remplissage. Dans ce cas, le dispositif de palettisation 30 comprend un support 48, fixe en hauteur, configuré pour supporter la palette 34 (plus largement le plateau) en cours de remplissage. Selon une configuration, le support 48 peut se présenter sous la forme d'un convoyeur à rouleau permettant d'acheminer, une à une, les palettes vides et d'évacuer les palettes pleines.

Selon un deuxième mode de réalisation, visible sur la figure 4, chaque palette 34 est mobile verticalement lors de son remplissage. Dans ce cas, le dispositif de palettisation 30 comprend un support 48' mobile verticalement. Selon une configuration, ce support 48' mobile est solidaire d'un vérin télescopique vertical. Bien entendu, l'invention n'est pas limitée à ce mode de réalisation. Ainsi, le support 48' pourrait être intégré à un ascenseur, comme illustré sur la figure 1.

Le dispositif de palettisation 30 comprend également une fausse palette 50 sur laquelle chaque couche de sacs est formée avant d'être déposée sur la palette 34.

Selon un mode de réalisation, une fausse palette 50 comprend deux demi-plaques 50.1, 50.2 configurées pour occuper un état fermé dans lequel elles sont jointives pour permettre la formation d'au moins une couche et un état ouvert dans lequel elles sont écartées de manière à ce que la couche de sacs formée sur la fausse palette 50 soit déposée sur la dernière couche de sacs de la palette ou sur la palette vide.

Selon une caractéristique de l'invention, la fausse palette 50 est mobile au moins dans un plan horizontal pour positionner les sacs selon un agencement donné pour chaque couche. A cet effet, le dispositif de palettisation 30 comprend au moins actionneur 52, comme un bras robotisé, configuré pour déplacer la fausse palette 50 au moins dans un plan horizontal ainsi qu'un système de contrôle 54 pour contrôler les mouvements de l'actionneur 52 et le positionnement de la fausse palette 50 sous le système de dépose 38 afin de déposer les sacs sur la fausse palette selon un agencement prédéterminé.

Ce système de contrôle 54 est configuré pour contrôler et coordonner les mouvements de la fausse palette 50, l'état ouvert/fermé de la fausse palette 50, le mouvement de pivotement de la tête 40 du système de dépose 38, l'état ouvert/fermé de la tête 40 ainsi que le mouvement vertical du support de palette si ce dernier est mobile.

Selon le premier mode de réalisation, l'actionneur 52 est configuré pour déplacer la fausse palette 50 dans un plan horizontal (selon les première et deuxième directions de dépose X, Y) et selon la direction verticale Z.

Selon ce premier mode de réalisation, dans un premier temps, l'actionneur 52 positionne la fausse palette 50, à l'état fermé, dans un plan horizontal situé juste en dessous du système de dépose 38. Lors de la réalisation de la couche, l'actionneur 52 commandé par le système de contrôle 54 déplace la fausse palette 50 dans le plan horizontal, sous le système de dépose 38. Lorsque la fausse palette 50 est positionnée de manière à ce que le sac présent dans le système de dépose 38 soit situé à l'aplomb de la position souhaitée sur la fausse palette 50, la tête 40 du système de dépose 38 passe de l'état fermé à l'état ouvert si bien que le sac tombe dans la position souhaitée sur la fausse palette 50. Cette étape est répétée pour tous les sacs de la couche à former sur la fausse palette 50. Contrairement à l'art antérieur, ce n'est pas le système de dépose 38 qui se déplace dans un plan horizontal mais la fausse palette 50.

Lorsque la couche est complète, l'actionneur 52 déplace la fausse palette 50 juste au-dessus de la dernière couche déposée sur la palette 34 ou de la palette 34 si cette dernière est vide. Le système de contrôle 54 commande le changement d'état de la fausse palette 50 qui passe de l'état fermé à l'état ouvert de manière à ce que la couche formée sur la fausse palette 50 soit déposée sur la dernière couche de la palette 34 ou directement sur la palette 34 si cette dernière est vide.

En suivant, l'actionneur 52 décale la fausse palette 50 vers le haut de manière à pouvoir la fermer, puis la repositionne dans le plan situé juste en dessous du système de dépose 38. Les étapes précédemment décrites sont alors répétées.

Ce premier mode de réalisation est plus particulièrement adapté pour les cadences lentes.

Selon un deuxième mode de réalisation visible sur la figure 4, convenant aux cadences élevées, l'actionneur 52' est configuré pour déplacer la fausse palette 50 uniquement dans un plan horizontal situé juste en dessous du système de dépose 38. Selon ce deuxième mode de réalisation, le support 48' supportant la palette 34 est mobile verticalement de manière à ce que la palette vide ou la dernière couche déposée sur la palette 34 soit positionnée juste en dessous de la fausse palette 50.

Selon ce deuxième mode de réalisation, lors de la réalisation de la couche, l'actionneur 52' déplace la fausse palette 50 dans le plan horizontal situé sous le système de dépose 38. Lorsque la fausse palette 50 est positionnée de manière à ce que le sac présent dans le système de dépose 38 soit situé à l'aplomb de la position souhaitée sur la fausse palette 50, la tête 40 du système de dépose 38 passe de l'état fermé à l'état ouvert si bien que le sac tombe dans la position souhaitée sur la fausse palette 50. Cette étape est répétée pour tous les sacs de la couche à former sur la fausse palette 50.

En parallèle, le système de contrôle commande le déplacement du support 48' de manière à ce que la palette vide ou la dernière couche déposée sur la palette 34 soit positionnée juste en dessous de la fausse palette 50. Dès que la couche est complète sur la fausse palette 50 et que le support 48' est correctement positionné, le système de contrôle 54 commande le changement d'état de la fausse palette 50 qui passe de l'état fermé à l'état ouvert de manière à ce que la couche complète soit déposée sur la dernière couche de la palette 34 ou directement sur la palette 34 si cette dernière est vide. Le support 48' est décalé vers le bas de manière à permettre la fermeture de la fausse palette 50. Une nouvelle couche peut alors être formée sur la fausse palette 50.

Quel que soit le mode de réalisation, le dispositif de palettisation 30 comprend au moins un cadre 56, positionné au-dessus et/ou au-dessous de la fausse palette 50, relié à la fausse palette 50 et permettant de conformer la couche de sacs formée sur la fausse palette 50.

## Revendications

1. Dispositif de palettisation configuré pour déposer sur une palette (34), couche par couche, des sacs (32) selon un agencement prédéterminé, comprenant :
- un système d'alimentation en sacs (36) configuré pour acheminer les sacs les uns à la suite des autres, selon une orientation d'alimentation (OA) donnée,
- un système de dépose (38), positionné dans le prolongement du système d'alimentation en sacs (36), configuré pour supporter au moins un sac (32), l'orienter selon une première ou deuxième direction de dépose (X, Y) et le déposer,
- une fausse palette (50) sur laquelle chaque couche de sacs est formée avant d'être déposée sur la palette (34),
- un support (48, 48') pour supporter la palette (34),
**caractérisé en ce que** le dispositif de palettisation comprend au moins un actionneur (52, 52') configuré pour déplacer la fausse palette (50) au moins dans un plan horizontal ainsi qu'un système de contrôle (54) pour contrôler le positionnement de la fausse palette (50) sous le système de dépose (38) afin de déposer les sacs sur la fausse palette (50) selon un agencement prédéterminé.

2. Dispositif de palettisation selon la revendication 1, **caractérisé en ce que** l'actionneur (52) est configuré pour déplacer la palette (34) dans un plan horizontal et selon une direction verticale Z.

3. Dispositif de palettisation selon la revendication 1, **caractérisé en ce que** l'actionneur (52') est configuré pour déplacer la fausse palette (50) uniquement dans un plan horizontal situé juste en dessous du système de dépose (38) et **en ce que** le support (48') supportant la palette (34) est mobile verticalement de manière à ce que la palette vide ou la dernière couche déposée sur la palette (34) soit positionnée juste en dessous de la fausse palette (50).

4. Dispositif de palettisation selon l'une des revendications précédentes, **caractérisé en ce que** l'actionneur (52, 52') est un bras robotisé.

5. Dispositif de palettisation selon l'une des revendications précédentes, **caractérisé en ce que** le système de dépose (38) comprend une tête (40) configurée pour occuper un état fermé dans lequel elle supporte un sac et un état ouvert dans lequel elle laisse tomber le sac, **en ce que** la fausse palette (50) comprend deux demi-plaques (50.1, 50.2) configurées pour occuper un état fermé dans lequel elles sont jointives pour permettre la formation d'au moins une couche et un état ouvert dans lequel elles sont écartées de manière à ce que la couche de sacs formée sur la fausse palette (50) soit déposée sur la dernière couche de sacs de la palette ou sur la palette vide et **en ce que** le système de contrôle (54) est configuré pour contrôler et coordonner les mouvements de la fausse palette (50), l'état ouvert/fermé de la fausse palette (50), un mouvement de pivotement de la tête (40) du système de dépose (38), l'état ouvert/fermé de la tête (40) ainsi que le mouvement vertical du support (48') de palette si ce dernier est mobile.

6. Dispositif de palettisation selon l'une des revendications précédentes, **caractérisé en ce que** le système de dépose (38) comprend une tête (40) configurée pour occuper un état fermé dans lequel elle supporte un sac et un état ouvert dans lequel elle laisse tomber le sac, une liaison pivotante (42) selon un axe vertical (Z) reliant la tête (40) à un châssis fixe (44) ainsi qu'un actionneur (46) permettant de faire pivoter la tête (40) autour de l'axe vertical (Z) et de la positionner selon une orientation souhaitée.

7. Dispositif de palettisation selon l'une des revendications précédentes, **caractérisé en ce qu'**il comprend au moins un cadre (56), positionné au-dessus et/ou au-dessous de la fausse palette (50), relié à la fausse palette (50) et permettant de conformer la couche de sacs formée sur la fausse palette (50).
